# EUROPÄISCHE PATENTSCHRIFT

(11) **EP 2 906 765 B1**
(45) Veröffentlichungstag und Bekanntmachung des Hinweises auf die Patenterteilung: **28.11.2018**
(21) Anmeldenummer: 13815684.9
(22) Anmeldetag: 06.09.2013
(51) Int. Cl.: E05B 81/24, E05B 79/20, E05B 85/02, H05K 5/00, F16C 1/14, F16C 1/26, F16C 1/00, H02K 1/00, E05B 81/32, E05B 81/28, E05B 81/06

(54) **STELLEINHEIT FÜR EIN KRAFTFAHRZEUGSCHLOSS NEBST HERSTELLUNGSVERFAHREN**
ACTUATING UNIT FOR A MOTOR VEHICLE LOCK AND CORRESPONDING METHOD OF PRODUCTION
UNITÉ D'ACTIONNEMENT POUR UNE SERRURE DE PORTIÈRE DE VÉHICULE À MOTEUR ET PROCÉDÉ DE FABRICATION

(30) Priorität: 12.10.2012 DE 102012218650
(43) Veröffentlichungstag der Anmeldung: 19.08.2015
(73) Patentinhaber: Kiekert Aktiengesellschaft, 42579 Heiligenhaus (DE)
(72) Erfinder: TÖPFER, Claus, 71063 Sindelfingen (DE); SCHLABS, Winfried, 44896 Bochum (DE)
(86) Internationale Anmeldenummer: PCT/DE2013/000508
(87) Internationale Veröffentlichungsnummer: WO 2014/056468

(56) Entgegenhaltungen:
- EP-A1- 0 764 751
- DE-A1- 19 908 155
- DE-U1- 29 505 265
- DE-U1-202009 010 787
- US-A- 5 214 332

## Beschreibung

Die Erfindung betrifft eine Stelleinheit für ein Kraftfahrzeugschloss mit einem Stellglied und einem Antrieb für ein Bewegen des Stellglieds, einem an das Stellglied angeschlossenen Bowdenzug und einem Anschlussteil für den Bowdenzug. Die Erfindung betrifft ferner ein Herstellungsverfahren.

Eine Stelleinheit umfasst einen Antrieb, insbesondere einen Elektromotor, und ein Stellglied, welches durch den Antrieb bewegt werden kann. Grundsätzlich kann das Stellglied durch den Antrieb zwischen zwei Positionen bzw. Endstellungen hin und her bewegt werden und zwar in der Regel linear. Der Antrieb und das Stellglied sind in einem Gehäuse untergebracht. Das Anschlussteil ist Teil des Gehäuses.

Eine Stelleinheit für ein Kraftfahrzeugschloss kann insbesondere Teil einer motorisch angetriebenen Servoschließeinrichtung beispielsweise für ein Heckklappenschloss sein. Bei einer solchen Stelleinheit für ein Kraftfahrzeugschloss sind das Kraftfahrzeugschloss und das Stellglied mittels eines Bowdenzugs verbunden. Schloss und motorischer Antrieb nebst Stellglied sind zumeist aus Platzgründen an verschiedenen Orten in der Kraftfahrzeugtür angeordnet.

Die vorliegende Erfindung bezieht sich auf die Anbindung des Bowdenzugs im Bereich des Antriebs. In der Regel wird durch die Stelleinheit eine Zugkraft durch den Bowdenzug auf eine Einrichtung, so zum Beispiel eine Schließeinrichtung, übertragen. Die Seele des Bowdenzugs kann aus dem Mantel bzw. der Hülle des Bowdenzugs heraus- und hinein bewegt werden.

Aus der Druckschrift DE 20 2009 010 787 U1 ist eine Stelleinheit mit einem Stellglied und einem Antrieb für ein Bewegen des Stellglieds bekannt. An das Stellglied ist ein Bowdenzug angeschlossen. Das Gehäuse umfasst ein Anschlussteil, durch welches die Seele des Bowdenzugs hindurchgeführt ist. Die in dieser Druckschrift gezeigte Figur zeigt einen Mikroschalter der Stelleinheit. Ein solcher Mikroschalter ist üblich, um eine Endstellung des Stellglieds der Stelleinheit zu ermitteln und die Bewegung des Stellglieds zu begrenzen. Fehlt ein solcher Mikroschalter, so wird eine Bewegung eines solchen Stellglieds nicht mehr durch den Mikroschalter, sondern in einer Endstellung durch das Anschlussteil begrenzt. Es können dann hohe Kräfte von typischerweise ca. 250 N auf das Anschlussteil ausgeübt werden. Es hat sich gezeigt, dass ein Anschlussteil, wie dieses aus der Druckschrift DE 20 2009 010 787 U1 bekannt ist, derart hohen Kräften nicht mehr gewachsen ist und zwar unabhängig davon, ob das Anschlussteil mit dem übrigen Gehäuse zum Beispiel durch Kleben und/oder Schrauben verbunden worden ist.

Die DE 295 05 265 U1 offenbart eine Stelleinheit für eine Bowden-Kraftübertragung, wobei die Stelleinheit ein Stellglied, ein an das Stellglied angeschlossenen Bowdenzug sowie ein Anschlussteil für den Bowdenzug umfasst. Ferner ist das Anschlussteil winkelförmig oder L-förmig ausgebildet ist.

Eine Stelleinheit mit einem Stellglied und einem mit dem Stellglied verbundenen Bowdenzug wird in der DE 20 2009 010787 U1 beschrieben, wobei das Stellglied und der Bowdenzug über ein Anschlussteil verbunden sind.

Die EP 0 764 751 A1 offenbart eine Stelleinheit mit einem Stellglied mit abfedernden Elementen, die an einem abgekanteten Gehäuse abfedern sollen, um derart eine Torsion einer Welle zu verhindern.

Die DE 199 08 155 A1 beschreibt eine Stelleinheit, das eine Schubstange umfasst, wobei die Schubstange innerhalb eines Gehäuseteils hin und her fahrbar ist.

Weiterhin offenbart die US 5 214 332 A ebenfalls eine Stelleinheit mit einem fahrbaren Stellglied, das mit einem Bowdenzug verbunden ist. Soweit nachfolgend nichts anderes angegeben, können die vorgenannten Merkmale einer Stelleinheit einzeln oder in Kombination Bestandteil der Erfindung sein.

Es ist Aufgabe der Erfindung, den Herstellungsaufwand für eine Stelleinheit mit Bowdenzug zu reduzieren.

Zur Lösung der Aufgabe wird Stelleinheit mit einem Stellglied und einem Antrieb für ein Bewegen des Stellglieds bereitgestellt. An das Stellglied ist ein Bowdenzug angeschlossen. Ein Anschlussteil für den Bowdenzug ist winkelförmig, insbesondere L-förmig, geformt und ist mit einem Schenkel, vorzugsweise im Fall einer L-Form mit seinem langen Schenkel, mit dem übrigen Gehäuse verbunden.

Durch die Winkelform oder L - Form und durch die Verbindung eines Schenkels einer solchen Form mit dem übrigen Gehäuse des Stellglieds steht eine große Fläche oder umlaufender Rand des Anschlussteil zur Verfügung, die bzw. der mit dem übrigen Teil des Gehäuses verbunden werden kann. Hierdurch kann Anschlussteil derart stabil an dem übrigen Teil des Gehäuses befestigt werden, dass dieses den Kräften eines Stellglieds auch dann gewachsen ist, wenn die Bewegung des Stellglieds nicht mithilfe eines Mikroschalters begrenzt wird, sondern durch das Anschlussteil. Durch die Winkelform bzw. L- Form wird erreicht, dass kein übermäßig großer Bauraum bereitgestellt werden muss. Insgesamt kann durch Wegfall eines Mikroschalters nebst zugehöriger Elektrik sowie Elektronik der technische Fertigungsaufwand reduziert werden. Für einen Mikroschalter nebst Elektrik bzw. Elektronik muss kein Bauraum bereitgestellt werden, was den Bauraum im Vergleich zum üblichen Stand der Technik reduziert. Außerdem wird dadurch Gewicht eingespart.

Erfindungsgemäß, dient das Anschlussteil als Anschlag zur Begrenzung der Bewegung des Stellglieds.

In einer Ausgestaltung der Erfindung umfasst das Stellglied an dem Ende, welches dem Bowdenzug zugewandt ist, eine Verbreiterung, die als Anschlag dient. Hierdurch wird die Kraft, die auf das Anschlussteil durch das Stellglied übertragen werden kann, flächig verteilt. Die mechanische Stabilität wird so weiter derart verbessert, dass ein Mikroschalter nebst Elektrik und Elektronik zur Begrenzung der Bewegung des Stellglieds entfallen kann. Die Verbreiterung umfasst vorzugsweise eine dem Bowdenzug zugewandte Oberfläche, die an die als Begrenzung dienende Innenseite des Anschlussteils angepasst ist, und/oder eine kreisrunde Grundfläche, um so mit geringem Gewicht und geringem Bauraum eine besonders geeignete Verbreiterung bereitzustellen, die flächig Kraft in das Anschlussteil einzuleiten vermag.

In einer Ausgestaltung der Erfindung besteht das Stellglied aus Metall. Die Verbreiterung, also der Anschlag des Stellglieds, kann ebenfalls aus Metall bestehen. Hierdurch wird die mechanische Stabilität weiter derart verbessert, dass ein Mikroschalter für ein Begrenzen der Bewegung eines Stellglieds nebst Elektrik und Elektronik entfallen kann. Auch ermöglicht diese Ausführungsform, eine hinreichend stabile Pressverbindung zwischen Stellglied und Seele des Bowdenzugs bereitzustellen, um so das Stellglied mit der Seele auf technisch besonders einfache Weise zu verbinden.

In einer Ausgestaltung der Erfindung ist die Seele des Bowdenzugs durch Verpressen mit dem Stellglied verbunden. Es gibt dann eine Pressverbindung zwischen Stellglied und Seele des Bowdenzugs. So umfasst das Stellglied insbesondere an seinem Ende, welches dem Anschlussteil zugewandt ist, eine Öffnung oder Bohrung, in die die Seele des Bowdenzugs hineinreicht. Das Ende des Stellglieds mit der Öffnung oder Bohrung ist anschließend so verpresst worden, dass die Seele des Bowdenzugs durch Kraftschluss mit dem Stellglied verbunden ist. Diese Ausgestaltung ist besonders platzsparend und auf technisch einfache Weise zu realisieren. Es gelingt die Schaffung einer derart festen Verbindung zwischen Stellglied und Bowdenzug, dass diese den auftretenden Kräften auch dann gewachsen ist, wenn ein Mikroschalter zur Begrenzung der Bewegung des Stellglieds nicht vorhanden ist.

In einer Ausgestaltung der Erfindung ist das Stellglied eine Spindel, die durch den Antrieb linear bewegt wird.

In einer Ausgestaltung der Erfindung ist das Teil des Gehäuses, welches mit dem Anschlussteil verbunden ist, einstückig ausgestaltet. Die Stabilität wird dadurch weiter verbessert, so dass ein Mikroschalter zur Begrenzung der Bewegung des Stellglieds entfallen kann.

In einer Ausgestaltung der Erfindung ist das Anschlussteil mit dem übrigen Teil des Gehäuses zumindest teilweise durch Verschrauben verbunden. Insbesondere umfasst das Anschlussteil ein oder mehrerer Innengewinde, in welche(s) jeweils eine Schraube hinein geschraubt worden ist. Eine jede Schraube führt durch eine entsprechende Öffnung des übrigen Teils des Gehäuses hindurch, so dass die entsprechenden Gehäuseteile durch Schraubverbindungen miteinander verbunden sind. Möglich ist insbesondere auch eine Nietverbindung anstelle einer Schraubverbindung. Eine Nietverbindung kommt in Betracht, wenn die Gehäuseteile nicht mehr voneinander gelöst werden müssen. Durch diese Ausgestaltungen wird die mechanische Stabilität weiter verbessert, so dass ein Mikroschalter zur Begrenzung der Bewegung des Stellglieds entfallen kann. Die Gehäuseteile können auch miteinander verklebt oder verschweißt worden sein, falls ein Lösen der Verbindung nicht mehr beabsichtigt ist.

In einer Ausgestaltung der Erfindung gibt es eine Scharnierverbindung, die das Anschlussteil mit dem übrigen Teil des Gehäuses verbindet. Das Scharnier ist vorzugsweise beim freien Ende des Schenkels der Winkelform, der mit dem übrigen Teil des Gehäuses verbunden ist, vorgesehen. Die mechanische Stabilität kann dadurch derart weiter derart verbessert werden, dass ein Mikroschalter zur Begrenzung der Bewegung des Stellglieds entfallen kann. Außerdem gelingt so eine Fertigung der Stelleinheit besonders einfach und schnell.

In einer Ausgestaltung der Erfindung ist der Antrieb bzw. Motor der Stelleinheit in dem Teil des Gehäuses untergebracht, der den Schenkel des Anschlussteils umfasst, der mit einem weiteren Teil des Gehäuses verbunden ist. Der Motor nebst einer Motorachse erstreckt sich insbesondere senkrecht zur Längserstreckung des Stellglieds, also insbesondere senkrecht zur Längsachse einer Spindel. Stellglied und Achse des Motors schließen dann einen rechten Winkel ein. Diese Ausgestaltung trägt weiter verbessert dazu bei, dass kein großer Bauraum erforderlich ist.

In einer Ausgestaltung der Erfindung dient das Anschlussteil unmittelbar der Aufnahme der Hülle bzw. des Mantels des Bowdenzugs. Insbesondere umfasst das Anschlussteil eine ringartige Aufnahme, welche die Hülle bzw. den Mantel des Bowdenzugs umringt. Die Position der Hülle des Bowdenzugs wird so vorteilhaft stabilisiert. Die Seele des Bowdenzugs ist durch das Anschlussteil hindurchgeführt. Das Anschlussteil umfasst eine entsprechende Öffnung oder Bohrung. Diese Ausgestaltung kann technisch besonders einfach mit geringem Bauraum und geringem Gewicht realisiert werden.

Gemäß der vorliegenden Erfindung dient das Gehäuse der Stelleinheit als Gegenlager oder Endanschlag für das Stellglied. Es wird dadurch möglich, einen Mikroschalter zur Begrenzung der Bewegung des Stellglieds vorteilhaft entfallen lassen zu können.

Die Stelleinheit mit Bowdenzug gemäß der vorliegenden Erfindung ist insbesondere Teil einer Zuziehhilfe eines Kraftfahrzeugs. Eine Zuziehhilfe eines Kraftfahrzeugs kann das Gesperre des Schlosses automatisiert von einer Position Vorrast in eine Position Hauptrast bewegen.

Zur Montage wird der Bowdenzugmantel mit der Bowdenzugseele bevorzugt durch die Öffnung des Anschlussteils eingeschoben und die Motoren- oder Getriebeanbindung, wie zum Beispiel eine Schnecke, erst nach dem Einführen des Bowdenzuges in die Öffnung des Anschlussteils unlösbar mit der Bowdenzugseele verbunden und zwar insbesondere durch eine Pressverbindung. Hierdurch wird es vorteilhaft möglich, ein einstückig ausgebildetes Anschlussteil vorzusehen, welches die bei Wegfall des genannten Mikroschalters auftretenden Zugkräfte leicht aufnehmen kann.

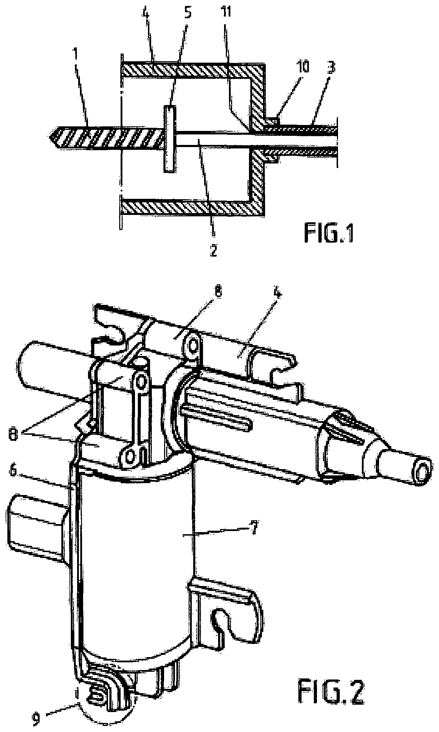

Die Erfindung wird anhand einer vorteilhaften Ausgestaltung durch die Figuren 1 und 2 näher erläutert. Es zeigen:
- Figur 1:: Ausschnitt einer Stelleinheit.
- Figur 2:: Gehäuse einer Stelleinheit.

Die Figur 1 skizziert einen Ausschnitt einer Stelleinheit mit einem Stellglied 1, nämlich einer Spindel, welches von einem nicht gezeigten Antrieb, nämlich einem Elektromotor, zwischen zwei Endstellungen linear hin und her bewegt werden kann. An die Spindel 1 ist ein Bowdenzug angeschlossen, der eine Seele 2 und einen Mantel 3 umfasst. Ein Schenkel 4 eines winkelförmigen Anschlussteils für den Bowdenzug ist mit seinem anderen, in der Figur 1 nicht gezeigten Schenkel mit dem übrigen Gehäuse verbunden. Der Schenkel 4 des Anschlussteils weist eine ringartige Aufnahme 10 auf, die die Hülle bzw. den Mantel 3 des Bowdenzugs umringt. Die Position der Hülle 3 des Bowdenzugs wird so vorteilhaft stabilisiert. Die Seele 2 des Bowdenzugs ist durch eine daran angepasste Öffnung 11 am freien Ende des Schenkels 4 hindurchgeführt.

Das Stellglied 1 umfasst an dem Ende, welches dem Anschlussteil 4 zugewandt ist, eine scheibenförmige Verbreiterung 5, die als Anschlag dient. Hierdurch wird die Kraft, die auf das Anschlussteil 1 durch das Stellglied in einer Endstellung übertragen werden kann, flächig verteilt. Die Grundfläche der Verbreiterung 5 ist kreisrund. Die Innenseite, die an die Öffnung 11 angrenzt, ist planparallel. Die Oberfläche der Verbreiterung 5, die dieser Innenseite zugewandt ist, ist ebenfalls planparallel. Die beiden Oberflächen sind daher aneinander angepasst.

Die Spindel 1, also das Stellglied, besteht aus Metall. Das Ende mit der Verbreiterung 5 weist eine nicht dargestellte Bohrung auf, in die die Seele 2 des Bowdenzugs hineinreicht. Durch Verpressen wird die Seele 2 fest in der Bohrung gehalten. Die Seele 2 des Bowdenzugs ist also durch eine Pressverbindung mit dem Stellglied 1 verbunden.

Die Figur 2 zeigt ein Gehäuse einer derartigen Stelleinheit mit einem einstückigen, winkelförmigen Anschlussteil und einem weiteren einstückigen, rückseitigen Gehäuseteil 6. Ein Schenkel 7 des Anschlussteils ist mit diesem übrigen Teil 6 des Gehäuses unter anderem durch Verschrauben verbunden. Das Anschlussteil 4 umfasst Gehäusebereiche 8 mit Innengewinde, in welches jeweils rückseitig eine Schraube hineingeschraubt worden ist, um so die beiden Gehäuseteile 6 und 8 miteinander zu verschrauben.

Es gibt ferner ein Scharnier 9, welches das Anschlussteil mit dem übrigen, rückseitigen Gehäuseteil 6 verbindet. Das Scharnier 9 ist beim freien Ende des Schenkels 7 angeordnet, der dem Verbinden der beiden Gehäuseteile dient.

Der Motor der Stelleinheit ist in dem Teil des Gehäuses untergebracht, der den Schenkel 7 des Anschlussteils umfasst.

### Bezugszeichenliste

- 1:: Spindel
- 2:: Seele eines Bowdenzugs
- 3:: Mantel eines Bowdenzugs
- 4:: Schenkel eines Anschlussteils
- 5:: Verbreiterung
- 6:: rückseitiges Gehäuseteil
- 7:: Schenkel des Anschlussteils
- 8:: Gehäusebereich mit Innengewinde
- 9:: Scharnier
- 10:: ringförmige Aufnahme
- 11:: Öffnung im Gehäuseteil

## Patentansprüche

1. Stelleinheit für ein Kraftfahrzeugschloss mit einem Stellglied (1) und einem Antrieb für ein Bewegen des Stellglieds (1), einem an das Stellglied (1) angeschlossenen Bowdenzug (2, 3) und einem Anschlussteil (4, 7) für den Bowdenzug (2, 3), wobei das Anschlussteil (4, 7) winkelförmig, bevorzugt L-förmig, ist und mit einem Schenkel (7), insbesondere mit seinem längeren Schenkel, mit dem übrigen Gehäuse (6) verbunden ist, **dadurch gekennzeichnet, dass** das Anschlussteil (4, 7) als Anschlag zur Begrenzung der Bewegung des Stellglieds (1) dient.

2. Stelleinheit nach dem vorhergehenden Anspruch, **dadurch gekennzeichnet, dass** die Stelleinheit keinen Mikroschalter für ein begrenzen der Bewegung des Stellglieds (1) umfasst.

3. Stelleinheit nach einem der vorhergehenden Ansprüche, **gekennzeichnet durch** eine Verbreiterung (5) des Stellglieds (1), die als Anschlag für eine Anschlussteil-Innenseite mit einer Öffnung (11) für die Seele (2) des Bowdenzugs (4, 7) zu dienen vermag.

4. Stelleinheit nach einem der vorhergehenden Ansprüche, **dadurch gekennzeichnet, dass** das Stellglied (1) aus Metall besteht.

5. Stelleinheit nach einem der vorhergehenden Ansprüche, **dadurch gekennzeichnet, dass** das Stellglied (1) durch eine Pressverbindung mit der Seele (2) des Bowdenzugs verbunden ist.

6. Stelleinheit nach einem der vorhergehenden Ansprüche, **dadurch gekennzeichnet, dass** das Gehäuse der Stelleinheit durch nicht mehr als zwei Teile (4, 6, 7) gebildet ist.

7. Stelleinheit nach einem der vorhergehenden Ansprüche, **dadurch gekennzeichnet, dass** Gehäuseteile (4, 6, 7) durch Schraubverbindungen und/oder durch ein Scharnier (9) miteinander verbunden sind.

8. Stelleinheit nach einem der vorhergehenden Ansprüche, **dadurch gekennzeichnet, dass** ein Scharnier (9) an dem freien Ende des Schenkels (7) des Anschlussteils vorgesehen ist, welcher mit einem weiteren Gehäuseteil (6) verbunden ist.

9. Stelleinheit nach einem der vorhergehenden Ansprüche, **dadurch gekennzeichnet, dass** der Antrieb der Stelleinheit in dem Teil des Gehäuses untergebracht ist, der den Schenkel (7) des Anschlussteils umfasst, der mit einem weiteren Gehäuseteil (6) verbunden ist.

10. Stelleinheit nach einem der vorhergehenden Ansprüche, **dadurch gekennzeichnet, dass** das Anschlussteil (4, 7) eine ringförmige Aufnahme (10) für den Mantel (3) des Bowdenzugs (2, 3) umfasst.

11. Verfahren zur Montage einer Stelleinheit für ein Kraftfahrzeugschloss nach einem der vorhergehenden Ansprüche, **dadurch gekennzeichnet, dass** die Seele (2) des Bowdenzugs durch eine Öffnung (11) im Anschlussteil (4, 7) hindurch gesteckt wird und das hindurchgesteckte Ende der Seele (2) mit dem Stellglied (1) verbunden wird und zwar insbesondere durch Hineinstecken eines Endes der Seele (2) des Bowdenzugs in eine Öffnung im Stellglied (1) und anschließendem Verpressen der Öffnung zur Herstellung einer Pressverbindung.

## Claims

1. Actuator unit for a motor vehicle lock with an actuator (1) and a drive for movement of the actuator (1), a Bowden cable (2, 3) connected to the actuator (1) and a connecting component (4, 7) for the Bowden cable (2, 3), whereby the connecting component (4, 7) is angular, preferably L-shaped and connected with a leg (7), in particular with its longer leg with the remaining housing (6), **characterized in that** the connecting component (4, 7) acts as a stop to limit the movement of the actuator (1).

2. Actuator unit according to the previous claim, **characterized in that** the actuator unit has no microswitch to limit movement of the actuator (1).

3. Actuator unit according to one of the previous claims, **characterized by** a widening (5) of the actuator (1), which is capable of acting as a stop for the inside of a connecting component with an aperture (11) for the core (2) of the Bowden cable (4, 7).

4. Actuator unit according to one of the previous claims, **characterized in that** the actuator (1) is made of metal.

5. Actuator unit according to one of the previous claims, **characterized in that** the actuator (1) is connected by means of a crimping connection with the core (2) of the Bowden cable.

6. Actuator unit according to one of the previous claims, **characterized in that** the actuator unit housing is formed by not more than two components (4, 6, 7).

7. Actuator unit according to one of the previous claims, **characterized in that** the housing components (4, 6, 7) are connected by screw connections and/or by a hinge (9).

8. Actuator unit according to one of the previous claims, **characterized in that** a hinge (9) connected to the free end of the leg (7) of the connecting component is provided for which is connected to a further housing component (6).

9. Actuator unit according to one of the previous claims, **characterized in that** the drive of the actuator unit is accommodated in the component of the housing which encompasses the leg (7) of the connecting component which is connected to a further housing component (6).

10. Actuator unit according to one of the previous claims, **characterized in that** the connecting component (4, 7) encompasses a ring-shaped mounting (10) for the sheath (3) of the Bowden cable (2, 3).

11. Procedure to mount an actuator unit for a motor vehicle lock according to one of the previous claims, **characterized in that** the core (2) of the Bowden cable is pushed through an aperture (11) in the connecting component (4, 7) and the pushed through end of the core (2) is connected to the actuator (1), in particular by pushing through one end of the core (2) of the Bowden cable into an aperture in the actuator (1) and subsequent pressing of the aperture to produce a pressing connection.

## Revendications

1. Unité de réglage pour une serrure de voiture équipée d'un actionneur (1) et d'un entraînement permettant à l'actionneur (1) de se déplacer, d'un câble Bowden (2, 3) raccordé à l'actionneur (1), et d'un raccord (4, 7) pour le câble Bowden (2, 3), à savoir que le raccord (4, 7) est en forme d'équerre, de préférence en forme de L, est relié au reste du corps (6) à l'aide d'une patte (7), et notamment de sa patte la plus longue, **caractérisée en ce que** le raccord (4, 7) sert de butée afin de limiter le mouvement de l'actionneur (1).

2. Unité de réglage selon la revendication précédente, **caractérisée en ce que** l'unité de réglage n'est pas équipée d'un microrupteur permettant de limiter le mouvement de l'actionneur (1).

3. Unité de réglage selon une des revendications précédentes, **caractérisée par** un élargissement (5) de l'actionneur (1), cet élargissement pouvant servir de butée à la partie intérieure du raccord, grâce à une ouverture (11) pour l'âme (2) du câble Bowden (4, 7).

4. Unité de réglage selon une des revendications précédentes, **caractérisée en ce que** l'actionneur (1) est en métal.

5. Unité de réglage selon une des revendications précédentes, **caractérisée en ce que** l'actionneur (1) est relié à l'âme (2) du câble Bowden grâce à un emmanchement.

6. Unité de réglage selon une des revendications précédentes, **caractérisée en ce que** le boîtier de l'unité de réglage ne se compose de pas plus de deux pièces (4, 6, 7).

7. Unité de réglage selon une des revendications précédentes, **caractérisée en ce que** des pièces du boîtier (4, 6, 7) sont reliées entre elles à l'aide de raccords vissés et/ou une charnière (9).

8. Unité de réglage selon une des revendications précédentes, **caractérisée en ce qu'**une charnière (9) est prévue à l'extrémité libre de la patte (7) du raccord, ce dernier étant relié à une autre pièce du boîtier (6).

9. Unité de réglage selon une des revendications précédentes, **caractérisée en ce que** l'entraînement de l'unité de réglage est inséré dans la pièce du boîtier comprenant la patte (7) du raccord relié à une autre pièce du boîtier (6).

10. Unité de réglage selon une des revendications précédentes, **caractérisée** en ce le raccord (4, 7) comprend un logement circulaire (10) pour la gaine (3) du câble Bowden (2, 3).

11. Procédé de montage d'une unité de réglage pour une serrure de voiture selon une des revendications précédentes, **caractérisé en ce que** l'âme (2) du câble Bowden est insérée dans le raccord (4, 7) par une ouverture (11), et **en ce que** l'extrémité insérée de l'âme (2) est reliée à l'actionneur (1), notamment par l'insertion d'une extrémité de l'âme (2) du câble Bowden dans une ouverture dans l'actionneur (1), suivie par une compression de l'ouverture afin d'obtenir raccordement serré.
